# EUROPÄISCHE PATENTSCHRIFT

(11) **EP 2 251 640 B1**
(45) Veröffentlichungstag und Bekanntmachung des Hinweises auf die Patenterteilung: **03.04.2013**
(21) Anmeldenummer: 10163016.8
(22) Anmeldetag: 17.05.2010
(51) Int. Cl.: G01C 9/28

(54) **Einstückig spritzgegossener Kunststoff-Libellenkörper und -halter-Verbund, zum Einsatz in einer Wasserwaage**
Plastic level vial and vial holder unit, produced a a single piece, using injection moulding, for use in a spirit level
Unité de fiole de niveau et de support de fiole de niveau, moulé par injection en une seule pièce en matière plastique, destiné à l'utilisation dans un niveau à bulle

(30) Priorität: 15.05.2009 DE 102009003158
(43) Veröffentlichungstag der Anmeldung: 17.11.2010
(73) Patentinhaber: BAYERISCHE MASS-INDUSTRIE ARNO KELLER GMBH, 91217 Hersbruck (DE)
(72) Erfinder: Keller, Hans, 91217, Hersbruck (DE); Dengler, Herbert, 91217, Hersbruck (DE); Hubert, Ralf, 90765, Fürth (DE)
(74) Vertreter: Götz, Georg Alois

(56) Entgegenhaltungen:
- EP-A1- 1 873 487

## Beschreibung

Die Erfindung betrifft ein Verfahren zur Herstellung einer Libelle für eine Wasserwaage, wobei ein transparenter, hohler Libellenkörper mit einer eine Gasblase enthaltenden Flüssigkeit gefüllt und mit einer oder mehreren kontrastierenden Markierungen versehen wird. Letztere entsprechen einer Justagestellung der Gasblase und/oder des Libellenkörper-Hohlraums, beispielsweise realisiert als Bohrung im Libellenkörper.

Ferner betrifft die Erfindung ein Verfahren zur Herstellung einer Wasserwaage unter Verwendung der angesprochenen Libelle, wobei ein Libellenträger oder -halter und eine Libelle in eine Aufnahme-Aussparung der Wasserwaage, insbesondere von deren Profilkörper, eingesetzt werden. Der Profilkörper weist die Messfläche(n) für die Wasserwaage auf.

Weiter betrifft die Erfindung eine entsprechend hergestellte Libelle, deren transparenter hohler Libellenkörper mit einem auskragendem oder abstehenden Libellenträger oder -halter versehen ist. Letzterer bildet mit einer oder mehreren Außenkanten, -flächen oder sonstigen Begrenzungen oder Außenhüllen Auflagemittel, insbesondere mindestens eine Auflagegerade oder - ebene und/oder gekrümmte Auflagelinie oder -fläche, die zur Auflage an eine Wasserwaagen-Wandung oder -Kante der Aufnahme-Aussparung der Wasserwaage gedacht ist. Eine Referenzachse, -kurve, -ebene und/oder gekrümmte/ewölbte Referenzfläche bilden ein oder mehrere Symmetrieelemente für den Hohlraum des Libellenkörpers. Insbesondere kann die Referenzachse oder -kurve eine Mittel- oder Symmetrieachse oder gekrümmte Mittel- oder Symmetrielinie darstellen, worum der Libellenkörper konzentrisch ist.

Weiter betrifft die Erfindung eine Wasserwaage, deren Profilkörper eine oder mehrere Messflächen oder -sohlen sowie eine Aufnahme-Aussparung zur Aufnahme der angesprochenen Libelle aufweist.

Bekannt sind Wasserwaagen mit einer oder mehreren Libellen-Aufnahme-Aussparungen im Messflächen-Profilkörper, wobei bei der Herstellung zunächst ein Libellenhalter, Libellenträger, Libellenrahmen, eine Libellenfassung oder dergleichen in die Aufnahme-Aussparung eingesetzt und fixiert wird, und dann die Libelle eingesetzt, justiert und fixiert wird (vgl. z. B. DE 34 32 911 A1, DE 35 32 124 A1, DE 35 46 816 C2).

DE 34 32 911 A1 lehrt, in den Wasserwaagen-Profilkörper eine Libellenfassung einzusetzen, worin der Hohlkörper der Libelle zur Justierung wie auf einer Wippe hin- und her kippbar ist, bis die Gasblase innerhalb des Libellenhohlkörpers genau zwischen zwei Markierungen steht. Dabei liegt der Wasserwaagen-Profilkörper, beispielsweise ein rohrartiges Aluminium-Hohlprofil, waagrecht auf einer Referenzfläche.

DE 35 46 816 C2 gibt die Anregung, den Libellenkörper in eine Ausnehmung des bereits im Wasserwaagen-Hohlprofil befindlichen Libellenhalters einzulegen und darin nach erfolgter Justierung zu fixieren, sei es durch eine Klemmverbindung, Verschraubung, Verstiftung, Klebeverbindung oder Ultraschallt-Verschweißen. In DE 196 50 683 C2 ist zur Libellen-Fixierung auch Laserschweißen vorgeschlagen.

DE 36 06 774 C2 offenbart eine Libellen-Befestigung in einem Metallhohlprofil einer Wasserwaage. Ein Libellenträger, welcher der Aufnahme des Libellenkörpers dient, wird in ein Fenster des Metallhohlprofils eingesetzt und darin fixiert. Auf seiner Oberseite besitzt der Libellenträger einen kreisbogenförmigen Sitz, dem eine komplementär kreisbogenartige Unterseite eines durchsichtigen Libellenkörpers zur formschlüssigen Aufnahme zugeordnet ist. Durch diese Ausbildung sind dem Libellenkörper auf dem kreisbogenförmigen Sitz des Libellenhalters wiegeförmige Bewegungen ermöglicht, mittels welcher eine Justierung der Libelle im Libellenhalter bzw. im Profilkörper der Wasserwaage bewerkstelligt werden kann.

In DE 44 27 068 C1 wird ein Wasserwaagen-Herstellungsverfahren beschrieben, bei dem die Libelle über einen Libellenhalter in die Aufnahme-Aussparung der Wasserwaage zunächst ohne der Gasblase zugeordnete Markierungsringe eingesetzt, grob vorjustiert und fixiert wird. Als letzter Herstellungsschritt erfolgt die Markierung der Libelle für die Gasblase und - damit verbunden - die Feinjustierung des Libellenkörpers entsprechend einer vorbestimmten Winkellage (in der Regel Vertikal- und/oder Horizontallage), die später mit der fertig gestellten Wasserwaage überprüft werden soll. Die in der Regel zwei Markierungsringe lassen sich, solange der Wasserwaagen-Grundkörper auf einem Produktionsnormal liegt, durch Laser-Materialbearbeitung der Libellenwandung einbringen. Dabei erfolgt die Feinjustierung durch das Einbringen der Markierungsringe, ohne dass dabei die Verbindung der Libelle mit dem Libellenhalter mechanisch belastet und gar verändert wird.

DE 11 2006 000 989 T5 beschreibt ein Verfahren zur Kalibrierung eines Libellenröhrchens für eine Wasserwaage. Es wird von einem Wasserwaagenkörper mit einem Paar zueinander rechtwinklig angeordneter Bezugsflächen ausgegangen. Über eine Halterung am Wasserwaagenkörper ist das Libellenröhrchen so angeordnet, dass es relativ zu den Bezugsflächen durch Drehung um ein Paar zueinander rechtwinkliger Achsen kalibriert werden kann, deren jede rechtwinklig zur Längsrichtung des Libellenröhrchens verläuft. Die Justage findet also erst im Wasserwaagenkörper statt. Danach werden die Teile der Anordnung in ihren Relativpositionen zueinander mittels Klebstoff fixiert.

DE 699 05 557 T2 beschreibt ein Gussverfahren mit einsetzbarer Libelle für eine Wasserwaage. Ein Wasserwaagenrahmen weist zueinander parallele Waagflächen auf, die sich parallel zu den Längsachsen des Rahmens erstrecken. Die Libelle ist aus einem flüssigkeitsgefüllten Zylinder hergestellt, der mit einem Deckel verschlossen ist. Sie wird in den Buchtungen im Rahmen aufgenommen, die relativ zu den oberen und unteren Waagflächen derart ausgerichtet sind, dass die Längsachse der Libelle im Wesentlichen rechtwinklig oder parallel oder unter einem Winkel von 45° zu den Waagflächen liegt. Ferner wird eine Ausführung beschrieben, bei der der Rahmen in eine Spritzguss-Formhöhlung geladen wird. Mehrere Libellen werden dann in ausgesparte Bereiche von Formhöhlungen geladen, welche die Libellen aufnehmen. Die Formhälften des Formwerkzeugs besitzen Libellenverbindungsflächen, welche gewährleisten, dass die Libellen richtig positioniert sind. Plastische Masse wird dann in die Formhöhlung zwischen den Formhälften eingespritzt, um den Wasserwaagenrahmen damit zu umgeben. Weiter wird die Herstellung einer einstückigen Kunststoff-Wasserwaage beschrieben, wobei plastische Masse vollständig um die Libellen eingespritzt wird, nachdem die Libellen in eine Formhöhlung eines Formwerkzeugs geladen wurden, welche die Form der Wasserwaage aufweist. Die eingespritzte plastische Masse umgibt die Enden der Libellen, wobei letztere in ihren gewünschten Positionen gehalten werden. Der Kunststoff der Wasserwaage definiert die Waagflächen und umgibt und kapselt die Enden der Libellen ein, um letztere in Position zu halten. Die Libellen sind also mittels Insert-Molding in den Körper der Wasserwaage gegossen.

Die EP 1 873 487 A1 (EBISU) beschreibt eine Wasserwaage mit einem Wasserwaagen-Hohlprofil, einem Libellenkörper und einem Libellenhalter aus zwei Teilen. Die beiden Libellenhalterteile weisen einander zugeordnete Gleitanlageflächen auf, welche rampenartig bzw. schräg verlaufen und schiefe Ebenen gegenüber der Wasserwaagen-Grundebene bilden. Über die schrägen Gleitanlageflächen sind die beiden Libellenhalterteile gegeneinander verschiebbar unter Zuhilfenahme einer Verstell- und Verbindungsschraube, welche beide Libellenhalterteile durchsetzt und mit dem Innengewinde eines der beiden Libellenhalterteile in Eingriff steht.

Bei der Montage dieser aus EP 1 873 487 A1 vorbekannten Wasserwaage sind u. a. die folgenden vier Schritte erforderlich: Die beiden Libellenhalterteile werden, mit ihren schrägen Anlagegleitflächen aneinander liegend, mittels der Schraube verbunden. Der Libellenkörper wird in eine Aufnahme-Konkavität in einem der beiden Libellenhalterteile eingelegt. Das so vormontierte Libellensystem wird in das Wasserwaagenhohlprofil in dessen Längsrichtung eingeschoben, bis der Libellenkörper durch eine fensterartige Ausnehmung im Hohlprofil sichtbar ist. Sodann wird durch Anziehen der Verstellschraube eine Relativbewegung der beiden Libellenhalterteile zueinander ausgelöst, wobei sich das Libellenhalterteil in seinen äußeren Abmessungen vergrößert und dabei innerhalb des Hohlprofils festklemmt.

Der Erfindung liegt die Aufgabe zugrunde, die Wasserwaagen-Herstellung weiter zu vereinfachen und zu beschleunigen. Zur Lösung wird auf das im Anspruch 1 angegebene Libellen-Herstellungsverfahren, das im unabhängigen Anspruch 5 angegebene Wasserwaagen-Herstellungsverfahren, auf die im unabhängigen Anspruch 7 angegebene Libellel, auf die im unabhängigen Anspruch 12, angegebene Wasserwaage sowie auf die im unabhängigen Anspruch 15 angegebene Verwendung eines Spritzgusswerkzeugs verwiesen. Zweckmäßige, optionale Ausgestaltungen der Erfindung ergeben sich aus den abhängigen Ansprüchen.

Indem erfindungsgemäß der hohle transparente Libellenkörper bereits außerhalb des Profilkörpers der Wasserwaage mit dem Libellenträger oder -halter versehen oder verbunden wird, lässt sich der Vorteil einer leichteren und schnelleren Handhabung bei der Wasserwaagen-Montage erzielen. Die Außenkanten, -flächen oder sonstigen Begrenzungen des Libellenträgers oder -halters sind so gestaltet, dass Auflagemittel, beispielsweise wenigstens eine Auflagegerade oder -ebene gebildet werden, welche zur Anlage an eine Wasserwaagen-Wandung oder -Kante vorgesehen sind. Die Auflagegerade, -fläche (gewölbt) oder -ebene des Libellenträgers oder -halters ist in Verbindung mit der markierten Justagestellung der Libellen-Gasblase in ihrem Verlauf so gestaltet, dass ein zusammenhängender Verbund aus hohlem transparentem Libellenkörper und Libellenhalter oder -träger leicht und schnell justagegerecht in eine Aufnahme-Aussparung des Messflächen-Profilkörpers der Wasserwaage eingesetzt werden kann.

Gemäß einer beispielhaften Verfahrens-Ausgestaltung umfassen die Auflagemittel des Libellenträgers (6) oder -halters mindestens eine Auflagegerade (5a) oder -ebene und/oder gekrümmte Auflagelinie oder gekrümmte Auflagefläche, welche der jeweils komplementären Auflage-Wandung oder -Kante der Wasserwaage zugeordnet sind.

Gemäß einer anderen, beispielhaften Verfahrens-Ausgestaltung wird der Hohlraum des Libellenkörpers (7) zumindest teilweise symmetrisch und/oder konzentrisch bezüglich der Referenzachse (14), -kurve, - ebene und/oder -fläche gestaltet.

Die Herstellungseffizienz bzw. Herstellungszeit lässt sich noch weiter erhöhen beziehungsweise verkürzen, wenn nach der Erfindung der Libellenträger oder -halter mit dem Libellenkörper als einstückiger Verbund gefertigt wird. Der Libellenkörper und der Libellenträger bzw. -halter sind dann als einziges Stück leicht und schnell handhabbar bzw. in der Wasserwaage einsetzbar und/oder montierbar. Besonders effizient lässt sich die einstückige Ausbildung von Libellenkörper mit Libellenträger oder -halter im Wege des Kunststoff-Spritzgusses realisieren. Auch der erweiterte einstückige Verbund mit den Verbundkomponenten Libellenkörper, Libellenträger oder -halter und Markierung(en) kann im Rahmen der Erfindung zweckmäßig mittels Kunststoff-Spritzguss gefertigt werden. In Weiterführung dieses ErfindungsGedankens wird die Justagestellung der Gasblase und/oder der Markierungen mit der darauf über die Referenzachse bezogenen Auflagegerade oder -ebene mittels eines und/oder in einem Spritzgiess-Formwerkzeug erzeugt. Das dabei notwendige Spritzguss-Formwerkzeug lässt sich so im Rahmen der Erfindung zusätzlich und effizient zur Erzeugung der sich über die markierte Gasblase ergebenden Justagestellung einsetzen. Die mittels des Werkzeugs zu gießende Form beinhaltet mindestens ein die markierte Gasblase bzw. Justagestellung reflektierendes bzw. wiedergebendes Referenzelement, beispielsweise Referenzachse, -kurve, -ebene und/oder-fläche. Zweckmäßig kann darauf mit vorbestimmter Winkelrelation bezogen im Formwerkzeug die Auflagegerade oder -ebene des Libellenträgers oder -halters gestaltet werden.

Die Anordnung der erfindungsgemäß hergestellten Libelle in der Aufnahme-Aussparung einer Wasserwaage erfolgt vorteilhaft in Verbindung mit Federelementen, die eine Vorspannung erzeugen. Dazu ist es zweckmäßig, wenn das oder die Federelemente im Zuge der Herstellung des Verbunds aus Libellenkörper und Libellenhalter oder -träger baulich integriert mit erzeugt oder hergestellt werden. Insbesondere werden nach einer erfindungsgemäßen Verfahrensvariante das oder die Federelemente einstückig mit der Libelle und dem Libellenträger oder -halter ausgebildet. Entsprechendes gilt für die Gasblasen-Markierung am Hohlraum des Libellenkörpers, beispielsweise in Form von farblich kontrastierenden Markierungsringen, zwischen welchen sich die Gasblase in der Justagestellung befindet. In diesem Zusammenhang besteht eine vorteilhafte Erfindungsausbildung darin, dass der einstückige Verbund mit den Verbundkomponenten Libellenkörper, Libellenträger oder -halter, eine oder mehrere Markierungen und gegebenenfalls ein oder mehrere Federelemente mittels Spritzguss mit zwei, drei oder mehr Materialkomponenten gefertigt wird.

Dabei kann jede Verbundkomponente mit einheitlich einer der mehreren Spritzguss-Materialkomponenten realisiert sein. Ferner können nach einer Erfindungsvariante der Libellenkörper und der Libellenträger oder - halter und/oder gegebenenfalls das oder die Federelemente je mit einer einheitlichen Materialkomponente realisiert werden. Mit besonderem Vorteil sind unterschiedliche Verbundkomponenten wie beispielsweise Markierung und Libellenkörper mit jeweils unterschiedlichen Materialkomponenten und ferner unterschiedliche Verbundkomponenten wie Libellenkörper, Libellenträger oder - halter und/oder Federelemente mit einheitlichen Materialkomponenten gebildet. Die Verwendung möglichst wenig unterschiedlicher Materialkomponenten führt zu einer Fertigungsvereinfachung und zu verminderten Lagerhaltungskosten. Die Verwendung unterschiedlicher Materialkomponenten einerseits für den Libellenkörper und andererseits für die daran angebrachten Markierungsringe bei der Herstellung mittels Kunststoff-Spritzguss ist an sich aus EP 0 852 177 B1 "Verfahren und Spritzguss-Werkzeug zur Herstellung von Wasserwaagen-Libellen" bekannt.

Mit der bei der Libelle optional herstellbaren Aufsetzgerade oder Aufsetzebene ist der Weg zu einer vereinfachten Wasserwaagen-Herstellung eröffnet, indem zunächst der Libellenträger oder -halter und die Libelle miteinander als ein Verbund und/oder als ein Stück hergestellt werden. Im weiteren Herstellungsschritt wird dieser Verbund oder das Einzelstück in die Aufnahme-Aussparung eingesetzt, wobei der Libellenträger oder -halter in direkter Anlage an eine Wasserwaagen-Wandung oder -kante einer Aufnahme-Aussparung gebracht wird, welche parallel zu oder entsprechend einer Messfläche oder -Messsohle der Wasserwaage verläuft. Die der An- oder Auflage dienende Wasserwaagen-Wandung oder -kante verläuft vorzugsweise parallel zu oder entsprechend einer Messfläche oder Messsohle (3) der Wasserwaage. Dabei lässt sich zweckmäßig das eine Stück aus Libellenkörper und Libellenträger oder -halter nebst Markierung(en) so in die Aufnahme-Aussparung einsetzen, dass die oben angesprochene, durch den Hohlraum des Libellenkörpers verlaufende Referenzachse oder -ebene zur Wasserwaagen-Messfläche oder -Messsohle parallel oder rechtwinklig verläuft. Im Fall von nicht geradlinigen Referenzelementen wie gewölbte Symmetrie-Fäche oder gekrümmte Symmetrielinie beziehungsweise -kurve bei beispielsweise gebogenen Libellenkörper-Hohlräumen kommt es darauf an, dass in einem dortigen mittleren Punkt die zugehörige Tangente zur Wasserwaagen-Messfläche oder -Messsohle parallel oder rechtwinklig oder unter einem sonst vorbestimmten Winkel, beispielsweise 30 oder 45 Grad, verläuft.

Um diese justierte Stellung in der Wasserwaage stabil beizubehalten, besteht eine weitere, vorteilhafte Erfindungsausbildung darin, dass der Libellenträger oder -halter mit seiner Auflagegerade oder -ebene unter Vorspannung in Anlage an die Wasserwaagen-Wandung oder -kante gehalten wird. Die Vorspannung kann beispielsweise mittels eines oder mehrerer der oben angesprochenen Federelemente erzeugt werden. So ist der Weg zur erfindungsgemäßen Verfahrensvariante eröffnet, dass ein einstückiger Verbund aus Libelle und Libellenträger oder -halter mittels des oder der Federelemente in der Aufnahme-Aussparung gehalten und/oder gegen die Wasserwaagen-Wandung oder -kante gedrückt wird. Durch die Vorspannung ist gewährleistet, dass der Libellenträger oder -halter immer auf die Auflagegerade, -vorsprünge oder -fläche gedrückt wird und satt anliegt.

Realisierungen der Federelemente mittels separat hergestellter Komponenten liegen im Rahmen erfindungsgemäßer Ausführungsbeispiele: Metallfedern beispielsweise in Schraubenform, separat hergestellte Gummifedern oder auch einstückig mit dem Libellenkörper-Libellenhalter-Verbund integrierte Kunststofffedern beispielsweise in Augenform oder dergleichen. Insbesondere können die Federelemente zusammen mit dem Libellenträger oder -halter oder dem Libellenkörper als ein Stück bzw. einstückig vorzugsweise über Kunststoff-Spritzguss, insbesondere Mehrkomponenten-Kunststoff-Spritzguss ausgeführt sein, wie oben schon angesprochen. Für das oder die Federelemente kann dabei eine andere Materialkomponente als für den Libellenträger oder -halter, Libellenkörper usw. Verwendung finden.

Bei der Montage der Wasserwaage ist mit der erfindungsgemäß hergestellten Libelle die Möglichkeit eröffnet, Letztere über den Libellenträger oder -halter justagegerecht gegen die Aufnahme-Aussparung in Anlage zu bringen, indem die vom Libellenträger oder -halter definierte Auflagegerade oder -fläche bzw. -ebene parallel zur Messfläche oder Messsohle verläuft.

Eine weiter vereinfachte Herstellung und Konstruktion ergibt sich, wenn nach einer Erfindungsausbildung die Innenseite der Aufnahme-Aussparung, welche der Auflagegerade oder -fläche des Libellenhalters oder - trägers gegenüberliegt, ein Teil oder Abschnitt der Profilkörper-Wandung ist, auf deren Außenseite die Messfläche oder Messsohle verläuft.

Zur Gewährleistung einer zuverlässig präzisen Neigungsmessung ist der Libellenträger möglichst mit einem gewissen Druck gegen die Innenwände der Aufnahme-Aussparung zu halten. Dem dient eine Ausbildung der Erfindung, wonach die Spannung mittels eines oder mehrerer Federelemente erzeugt ist, die einerseits am Verbund aus Libellenträger oder - halter und Libellenkörper angreifen und andererseits gegen eine Innenseite eines Wandungsabschnitts des Wasserwaagen-Profilkörpers im Bereich der Aufnahme-Aussparung abgestützt sind.

Nach einem Erfindungsbeispiel insbesondere für Horizontalmessung verlaufen die Richtungen der resultierenden Federkräfte des einen oder der mehreren Federelemente senkrecht zur oben erläuterten Referenzachse, -linie, -ebene oder fläche, welche den Hohlraum durchsetzen. Zur Anwendung der Wasserwaage für eine Vertikalmessung ist eine Erfindungsausbildung dahingehend zweckmäßig, dass das oder die Federelemente mit ihren resultierenden Federkräften parallel zur Referenzachse oder sonstigen Referenzelementen verlaufend ausgebildet sind.

Im Hinblick auf die erfindungsgemäße Libelle besteht ein Ausführungsbeispiel darin, dass relativ zur Referenzachse, -kurve, -ebene und/oder -fläche der Hohlraum des Libellenkörpers zumindest teilweise eine symmetrische und/oder konzentrische Form aufweist.

Ein anderes Ausführungsbeispiel der erfindungsgemäßen Libelle ist, dass das oder die Federelemente zusammen mit dem Libellenträger oder -halter und/oder dem Libellenkörper (6) als ein Stück beziehungsweise einstückig vorzugsweise über Kunststoff-Spritzguss, insbesondere Mehrkomponenten-Kunststoffspritzguss, ausgeführt sind.

Gemäß einem zweckmäßigen Ausführungsbeispiel der erfindungsgemäßen Wasserwaage verläuft eine vom Libellenträger oder - halter definierte Auflagegerade oder -ebene parallel zur Messfläche oder - sohle.

Nach einem weiteren Wasserwaagen-Ausführungsbeispiel ist die Vorspannung mittels eines oder mehrerer Federelemente (13) erzeugt, welche gegen eine Innenseite einer Wandung des Wasserwaagen-Profilkörpers im Bereich der Aufnahme-Aussparung abgestützt sind.

Zweckmäßig bei der erfindungsgemäßen Wasserwaage ist eine Anordnung des einen oder der mehreren Federelemente derart, dass die resultierenden Federkräfte oder wenigstens Kräfte-Teilkomponenten davon senkrecht zur Messfläche oder -sohle ausgerichtet sind. Insbesondere ist bei der erfindungsgemäßen Wasserwaage eine Anordnung des einen oder der mehreren Federelemente besonders praktikabel, bei der die resultierenden Federkräfte parallel oder senkrecht zur den Libellenkörper (7) durchsetzenden Referenzachse (14) verlaufen.

Weitere Einzelheiten, Merkmale, (Unter-)Merkmalskombinationen, Wirkungen und Vorteile auf der Basis der Erfindung ergeben sich aus der nachfolgenden Beschreibung bevorzugter Ausführungsbeispiele der Erfindung sowie aus den Zeichnungen. Diese zeigen jeweils im schematischen Längsschnitt in:
- Fig. 1: eine Wasserwaagen-Messanordnung für die horizontale Messung,
- Fig.2: eine alternative Wasserwaagen-Messanordnung für die horizontale Messung,
- Fig.3: eine Wasserwaagen-Messanordnung für die vertikale Messung.

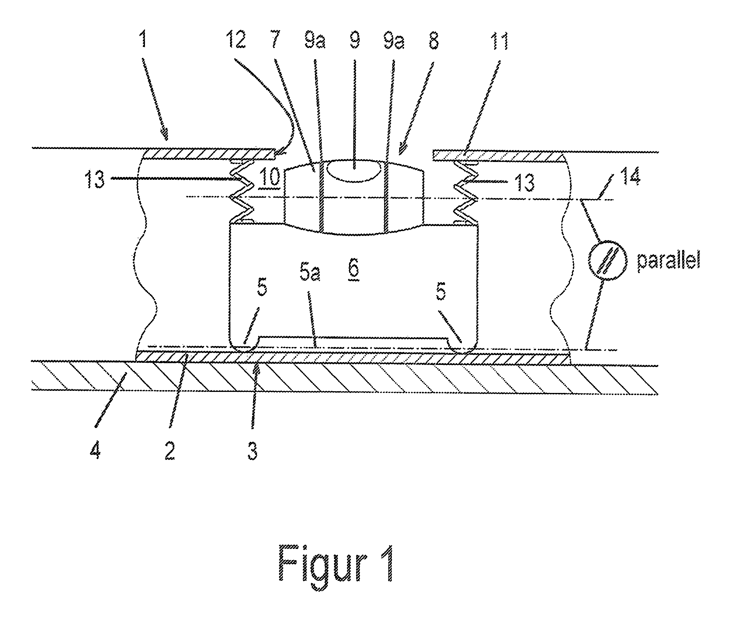

In Fig. 1 ist die Wasserwaage mit einem Hohlprofilkörper 1 realisiert, dessen erster Längswandungsabschnitt 2 auf seiner Außenseite eine Wasserwaagen-Messsohle 3 bildet. Darüber ist die Wasserwaage auf einen Prüfgegenstand 4 aufgesetzt, um dessen Neigung gegenüber der Horizontalen zu überprüfen. Auf die ebene und parallel zur Messsohle 3 verlaufende Innenseite des ersten Längswandungsabschnitts 2 ist innerhalb einer Aufnahme-Aussparung 10 im Profilkörper 1 über zwei Auflagevorsprünge 5 ein Libellenträger 6 aufgesetzt. Die Auflagevorsprünge 5 bilden eine (strichpunktiert gezeichnete) Auflagegerade 5a. Auf der Oberseite des Libellenträgers 6 befindet sich ein hohler transparenter Libellenkörper 7 zur Bildung einer Libelle 8, der mit dem Libellenträger 6 zu einem einzigen Stück baulich integriert ist. Der Libellenkörper 7 ist in seinem Hohlraum teilweise mit Flüssigkeit gefüllt, so dass eine Gasblase 9 verbleibt. Dieser sind zwei in Längsrichtung des Libellenkörpers 7 beabstandete Markierungsringe 9a zugeordnet, die vor dem Einsetzen in die Aufnahme-Aussparung 10 zusammen mit der Libelle 8 bzw. deren Libellenkörper 7 und dem Libellenträger 6 mit einstückig angesetzten Auflagevorsprüngen 5 in einem Spritzgieß-Formwerkzeug in einem Vorgang separat hergestellt worden sind.

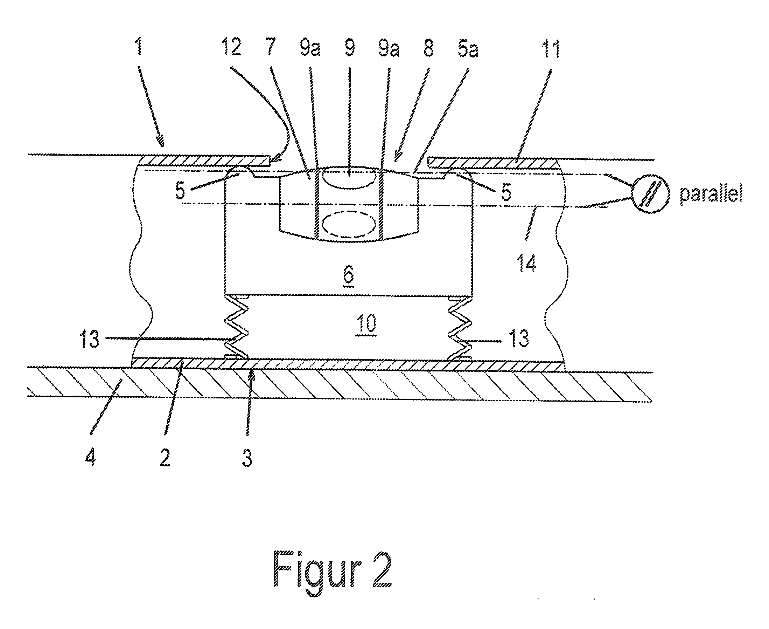

Zur Bildung der Aufnahme-Aussparung 10 ist ein dem ersten Längswandungsabschnitt 2 gegenüberliegender, zweiter Längswandungsabschnitt 11 mit einer Ausnehmung bzw. Durchbruch 12 versehen. An der Innenseite des zweiten Längswandungsabschnitts 11 im Bereich des Durchbruchs 12 bzw. der Aufnahme-Aussparung 10 sind schematisch dargestellte Federelemente 13, beispielsweise realisiert als metallische Schraubenfedern oder elastisch zusammendrückbare Kunststoffaugen, abgestützt. Sie greifen an der Oberseite des Libellenträgers 6 an und drücken diesen mit seinen Auflagevorsprüngen 5 an die Innenseite des ersten Längswandungsabschnitts 2 mit der Messsohle 3 auf seiner Außenseite. Dadurch ist gewährleistet, dass die Auflagegerade 5a parallel zur oben erläuterten Referenzachse 14 verläuft, die gemäß gezeichnetem Beispiel eine Längs-Symmetrieachse für den tonnenartig ausgebauchten, rotationssymmetrischen Libellenkörper 7 bildet und bei funktionsgerechtem Einsatz der Libellen-Libellenhalterverbunds in die Aufnhme-Aussparung 10 parallel (Fig. 1 und 2) oder senkrecht zur Messsohle 3 verläuft.

Eine gegenüber Fig. 1 alternative Form des Libellenträgers 6 ist in Fig. 2 gezeigt. Vom Ausführungsbeispiel nach Fig. 1 unterscheidet sich das gemäß Fig. 2 dadurch, dass die Auflagevorsprünge 5 des Libellenträgers 6 die der Messsohle 3 gegenüberliegende Innenseite der entsprechenden Längswandung 11 nahe bei der Ausnehmung bzw. dem Durchbruch 12 kontaktieren, wobei sich die dadurch definierte Auflagegerade 5a durch die Aufnahme-Aussparung 10 über und oberhalb der Libelle 8 erstreckt. Damit der Libellenträger 6 über die beiden Auflagevorsprünge 5 zuverlässig fest an der Innenseite der Längswandung 11 anliegt bzw. die Auflagegerade 5a und die Referenzachse 14 ihre Parallelstellung zuverlässig beibehalten, sind zwischen dem Libellenhalter 6 und dem ersten (hier unteren) Längswandungsabschnitt 2 die Federelemente 13 analog zur Fig. 1 in Angriff gebracht, das heißt mit senkrecht zur Referenzachse 14 verlaufenden Federkräften oder -achsen.

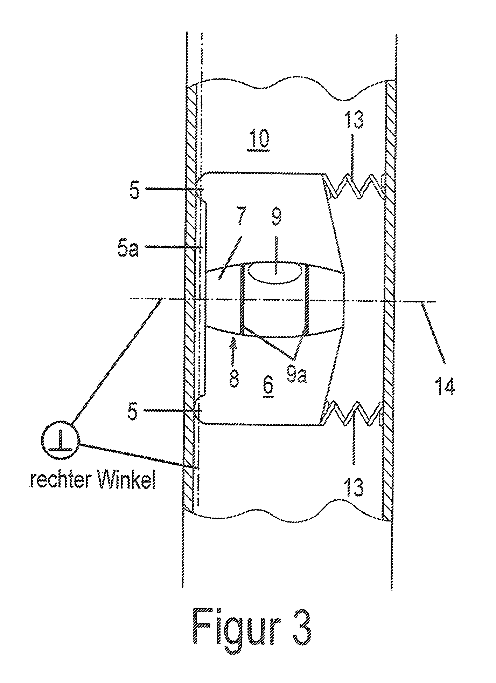

Die Messanordnung für die Vertikalmessung nach Fig. 3 unterscheidet sich von den Anordnungen nach Fig. 1 und 2 im Wesentlichen dadurch, dass die von den Auflagevorsprüngen 5 definierte, zur Messsohle 3 parallele Auflagegerade 5a im rechten Winkel zur Referenzachse 14 verläuft, welche wiederum für den rotationssymmetrisch tonnenartig ausgebauchten Libellenkörper 7 eine Längs-Symmetrieachse bildet. Die Federelemente 13 sind mit ihren resultierenden Federkräften nun parallel zur Referenzachse 14 bzw. zur Längsrichtung des Libellenkörpers 7 ausgerichtet. Im Übrigen gelten die obigen Ausführungen hier entsprechend.

### Bezugszeichenliste

- 1: Hohlprofilkörper
- 2: erster Längswandungsabschnitt
- 3: Wasserwaagen-Messsohle
- 4: Prüfgegenstand
- 5: Auflagevorsprung
- 5a: Auflagegerade
- 6: Libellenträger
- 7: Libellenkörper
- 8: Libelle
- 9: Gasblase
- 9a: Markierungsring
- 10: Aufnahme-Aussparung
- 11: zweiter Längswandungsabschnitt
- 12: Ausnehmung, Durchbruch
- 13: Federelemente
- 14: Referenzachse

## Patentansprüche

1. Verfahren zur Herstellung einer Libelle (8) für eine Wasserwaage, wobei ein transparenter, hohler Libellenkörper (7) beziehungsweise seine Bohrung oder sein sonstiger Hohlraum mit einer eine Gasblase (9) enthaltenden Flüssigkeit gefüllt und mit einer oder mehreren farblich kontrastierenden Markierungen (9a) versehen wird, die einer Justagestellung der Gasblase (9) und/oder des Libellen-Hohlraums zugeordnet sind, und der Libellen-Hohlraum von einer Referenzachse (14) oder -ebene symmetrisch durchsetzt wird, mit folgenden Schritten:
(a) der Libellenkörper (7) wird außerhalb der Wasserwaage und/oder des Profilkörpers der Wasserwaage mit einem auskragenden oder abstehenden Libellenträger (6) oder -halter versehen oder verbunden ,
(b) dabei werden über einer oder mehrere Außenkanten, -flächen, Vorsprünge (5) oder sonstigen Begrenzungen des Libellenträgers (6) oder - halters ein oder mehrere Auflagemittel gebildet, die einer jeweils komplementären Auflage-Wandung (2,11) oder -Kante der Wasserwaage zugeordnet sind,
**gekennzeichnet durch** die weiteren Schritte:
(c) der Libellenkörper (7) wird außerhalb der Wasserwaage und/oder eines Profilkörpers der Wasserwaage mit einem Verlauf der Referenzachse (14) oder -ebene gestaltet, welcher Verlauf in der Justagestellung vollständig parallel oder rechtwinklig zu einer gedachten Messfläche der Wasserwaage ist oder unter einem vorbestimmten Winkel von beispielsweise 30 oder 45 Grad steht,
(d) der Libellenträger (6) oder -halter wird im Wege des Kunststoff-Spritzgusses mit dem Libellenkörper (7) als einstückiger Verbund hergestellt.

2. Verfahren nach Anspruch 1, **dadurch gekennzeichnet, dass** außerhalb der Wasserwaage und/oder des Profilkörpers der Wasserwaage die eine oder mehreren Markierungen (9a) mit ihrer(n) Grundebene(n) so am Libellen-Hohlraum und/oder Libellenkörper angeordnet werden, dass zu einer jeweiligen Grundebene der Markierungen (9a) die Referenzachse (14) oder ebene senkrecht verläuft.

3. Verfahren nach einem der vorangehenden Ansprüche, **dadurch gekennzeichnet, dass** der Libellenkörper (7) und/oder der Libellenträger (6) oder -halter mit einem oder mehreren Federelementen (13) versehen werden.

4. Verfahren nach einem der vorangehenden Ansprüche, **dadurch gekennzeichnet, dass** der einstückige Verbund mit den Verbundkomponenten Libellenkörper, Libellenträger oder -halter und Markierung(en) (9a) und gegebenenfalls mit einem oder mehreren Federelementen (13) mittels Kunststoff-Spritzguss mit zwei, drei oder mehr Materialkomponenten gefertigt wird, wobei jede Verbundkomponente mit einer der mehreren Spritzguss-Materialkomponenten realisiert wird.

5. Verfahren zur Herstellung einer Wasserwaage mit einer nach einem der vorangehenden Ansprüche hergestellten Libelle (8), bei dem ein Libellenträger (6) oder -halter und eine Libelle (8) in eine Aufnahme-Aussparung (10) der Wasserwaage eingesetzt werden, **dadurch gekennzeichnet, dass** zunächst der Libellenträger (6) oder -halter und die Libelle (8) miteinander im Wege des Kunststoff-Spritzgusses als ein Stück hergestellt werden, welches dann in die Aufnahme-Aussparung (10) eingesetzt wird, wobei der Libellenträger (6) oder -halter so in direkter Anlage an eine Wasserwaagen-Wandung (2,11) oder -kante gebracht wird, dass eine den Libellen-Hohlraum symmetrisch durchsetzende Referenzachse (14) oder -ebene vollständig parallel oder senkrecht zur Messfläche oder Messsohle (3) der Wasserwaage verläuft.

6. Verfahren nach Anspruch 5, **dadurch gekennzeichnet, dass** der Libellenträger (6) oder -halter mit einer Vorspannung in Anlage an die Wasserwaagen-Wandung (2,11) oder -kante gehalten wird.

7. Libelle (8) für eine insbesondere nach einem der vorangehenden Ansprüche hergestellte Wasserwaage, mit einem transparenten, hohlen Libellenkörper (7), dessen Bohrung oder sonstiger Hohlraum mit einer eine Gasblase (9) enthaltenden Flüssigkeit gefüllt und mit einer oder mehreren Markierungen (9a) versehen ist, die einer Justagestellung der Gasblase (9) und/oder des Hohlraums des Libellenkörpers (7) zugeordnet sind, welcher Hohlraum von einer Referenzachse(14) oder -ebene symmetrisch durchsetzt ist, und der Libellenkörper (7) mit einem auskragenden oder abstehenden Libellenträger (6) oder -halter versehen ist, der mit einer oder mehreren Außenkanten, -flächen, Vorsprüngen (5) oder sonstigen Begrenzungen Auflagemittel bildet, die einer Wasserwaagen-Wandung (2,11) oder -Kante zugeordnet sind, **dadurch gekennzeichnet, dass** im Wege des Kunststoff-Spritzgusses der Libellenträger (6) oder - halter mit dem Libellenkörper (7) ohne die oder außerhalb der Wasserwaage einstückig ausgeführt ist, wobei der Libellenträger (6) oder - halter und der Libellenkörper (7) in Relation zueinander derart angeordnet sind, dass bei gedachter An- oder Auflage auf die Wasserwaagen-Wandung (2,11) oder -Kante die Referenzachse(14) oder -ebene vollständig parallel oder rechtwinklig zu einer Messfläche oder Messsohle der Wasserwaage ist oder unter einem vorbestimmten Winkel von beispielsweise 30 oder 45 Grad steht.

8. Libelle nach Anspruch 7, **dadurch gekennzeichnet, dass** die Auflagemittel des Libellenträgers (6) oder -halters als Auflagegerade (5a) oder -ebene realisiert sind, die parallel oder senkrecht zur Referenzachse (14), oder ebene verlaufen.

9. Libelle nach Anspruch 7 oder 8, **dadurch gekennzeichnet, dass** der Libellenträger (6) oder -halter, der oder die Markierungen (9a) und der Libellenkörper (7) und gegebenenfalls Andruck-Federelemente (13) gemeinsam mittels Kunststoff-Spritzguss hergestellt sind.

10. Libelle nach einem der vorangehenden Ansprüche, **dadurch gekennzeichnet, dass** die Auflagemittel des Libellenträgers (6) oder -halters an einer der Wasserwaagen-Wandung (2,11) zugeordneten Seite wenigstens zwei eine Auflagegerade (5a) definierende Auflage-Vorsprünge (5) umfassen.

11. Libelle nach einem der vorangehenden Ansprüche, **gekennzeichnet durch** ein oder mehrere, derart am Libellenkörper (7) oder am Libellenträger (6) oder -halter angeordnete Federelemente (13), dass deren resultierende Federkräfte oder Kräfte-Teilkomponenten davon zum Libellenträger (6) oder -halter und/oder zur Auflagegeraden (5a) und/oder zu den etwaigen Auflage-Vorsprüngen (5) hin ausgerichtet sind.

12. Wasserwaage, mit einem eine oder mehreren Messflächen oder -sohlen (3) aufweisenden Profilkörper (1) und mit einer Libelle (8), ausgebildet nach einem der Ansprüche 1 - 4 oder 7 - 11, welche in einer Aufnahme-Aussparung (10) des Profilkörpers (1) gefasst ist, wobei eine Bohrung oder ein sonstiger Hohlraum des Libellenkörpers (7) von einer Referenzachse(14) oder -ebene symmetrisch durchsetzt ist, welche zu einer Messfläche oder Messsohle der Wasserwaage vollständig parallel oder rechtwinklig ausgerichtet ist, **dadurch gekennzeichnet, dass** ein ohne Wasserwaage und/oder Wasserwaagen-Profilkörper einstückig im Wege des Kunststoff-Spritzgusses hergestellter Verbund aus Libellenkörper (7) und Libellenträger (6) oder -halter unter Vorspannung gegen eine Profilkörper-Wandung (2,11) in der Aufnahme-Aussparung (10) in Anlage gehalten ist.

13. Wasserwaage nach Anspruch 12, **dadurch gekennzeichnet, dass** die Innenseite der Aufnahme-Aussparung (10), welche einer Auflagegeraden (5a) oder -ebene des Verbunds aus Libellenkörper (7) und Libellenträger (6) oder -halter gegenüberliegt [Anspruch 14], Teil der Profilkörper-Wandung (2,11) ist, auf deren Außenseite die Messfläche oder -sohle (3) gebildet ist.

14. Wasserwaage nach einem der Ansprüche 12 oder 13, **dadurch gekennzeichnet, dass** die Auflagegerade (5a) oder -ebene durch die Aufnahme-Aussparung (10) im Bereich entweder der Aussparungsöffnung oder des Aussparungsbodens verläuft.

15. Verwendung eines Spritzgiess-Formwerkzeugs zur Herstellung eines einstückigen Libellen-Verbunds (8) mit den Verbundkomponenten Libellenkörper (7), Libellenträger (6) oder -halter und Markierung(en) (9a) und zur Erzeugung der sich über die markierte Gasblase beziehungsweise über die zwischen Markierungsringen (9a) befindliche Gasblase (9) ergebenden Justagestellung.

16. Verwendung nach Anspruch 15, **dadurch gekennzeichnet, dass** das Formwerkzeug zum Gießen einer Form eingesetzt wird, welche mindestens ein die markierte Gasblase bzw. Justagestellung reflektierendes bzw. wiedergebenden Referenzelement, beispielsweise Referenzachse(14), oder -ebene, beinhaltet.

## Claims

1. A method for producing a level (8) for a water level gauge, a transparent, hollow level body (7) or its bore hole or its other cavity being filled with a liquid containing a gas bubble (9) and being provided with one or more markings (9a) of contrasting colours which are assigned to an alignment position of the gas bubble (9) and/or of the level cavity, and a reference axis (14) or plane passing through the level cavity symmetrically, comprising the following steps:
(a) the level body (7) is provided with or connected to a projecting or protruding level carrier (6) outside of the water level gauge and/or the profile body of the water level gauge,
(b) one or more support means are formed here by one or more outer edges, surfaces, projections (5) or other boundaries of the level carrier (6) or holder which are assigned to a respectively complementary support wall (2, 11) or edge of the water level gauge, **characterised by** the further steps:
(c) the level body (7) is formed outside of the water level gauge and/or a profile body of the water level gauge with an extension of the reference axis (14) or plane, which extension in the alignment position is totally parallel or at right angles to a notional measuring surface of the water level gauge or is at a pre-determined angle of for example 30 or 45 degrees,
(d) the level carrier (6) or holder is produced by means of plastic injection moulding with the level body (7) as a one-piece composite.

2. The method according to Claim 1, **characterised in that** outside of the water level gauge and/or the profile body of the water level gauge the one or more markings (9a) are arranged with its/their base level(s) on the level cavity and/or level body such that the reference axis (14) or plane runs perpendicular to a respective base level of the markings (9a).

3. The method according to any of the preceding claims, **characterised in that** the level body (7) and/or the level carrier (6) or holder are provided with one or more spring elements (13).

4. The method according to any of the preceding claims, **characterised in that** the one-piece composite is produced with the composite components - the level body, the level carrier or holder and the marking(s) (9a), optionally with one or more spring elements (13), by means of plastic injection moulding with two, three or more material components, every composite component being made with one or the plurality of injection moulding material components.

5. A method for producing a water level gauge comprising a level (8) produced according to any of the preceding claims, wherein a level carrier (6) or holder and a level (8) are inserted into a receiving recess (10) of the water level gauge, **characterised in that** the level carrier (6) or holder and the level (8) are first of all produced with one another by means of plastic injection moulding as one piece which is then inserted into the receiving recess (10), the level carrier (6) or holder being brought into direct contact with a water level gauge wall (2, 11) or edge such that a reference axis (14) or plane passing through the level cavity symmetrically runs totally parallel or perpendicular to the measuring surface or measuring base (3) of the water level gauge.

6. The method according to Claim 5, **characterised in that** the level carrier (6) or holder is held by pre-tensioning in contact with the water level gauge wall (2, 11) or edge.

7. A level (8) for a water level gauge produced in particular according to any of the preceding claims, comprising a transparent, hollow level body (7), the bore hole or other cavity of which is filled with a liquid containing a gas bubble (9) and comprising one or more markings (9a) which are assigned to an alignment position of the gas bubble (9) and/or of the cavity of the level body (7), which cavity is passed through symmetrically by a reference axis (14) or plane, and the level body (7) is provided with a projecting or protruding level carrier (6) or holder which forms support means with one or more outer edges, surfaces, projections (5) or other boundaries which are assigned to a water level gauge wall (2, 11) or edge, **characterised in that** by means of plastic injection moulding the level carrier (6) or holder is made in one piece with the level body (7) without the or outside of the water level gauge, the level carrier (6) or holder and the level body (7) being arranged in relation to one another such that with notional resting against or contact with the water level gauge wall (2, 11) or edge the reference axis (14) or plane is totally parallel or at right angles to a measuring surface or measuring base of the water level gauge or is at a pre-determined angle of for example 30 or 45 degrees.

8. The level according to Claim 7, **characterised in that** the support means of the level carrier (6) or holder are produced in the form of a support line (5a) or plane which run parallel or perpendicular to the reference axis (14) or plane.

9. The level according to Claim 7 or 8, **characterised in that** the level carrier (6) or holder, the marking or markings (9a), the level body (7) and optionally pressing spring elements (13) are produced jointly by means of plastic injection moulding.

10. The level according to any of the preceding claims, **characterised in that** the support means of the level carrier (6) or holder comprise at least two support projections (5) defining a support line (5a) on a side assigned to the water level gauge wall (2, 11).

11. The level according to any of the preceding claims, **characterised by** one or more spring elements (13) arranged on the level body (7) or on the level carrier (6) or holder such that the resulting spring forces or partial force components of the latter are aligned from here to the level carrier (6) or holder and/or to the support lines (5a) and/or to any support projections (5).

12. A water level gauge comprising a profile body (1) that has one or more measuring surfaces or bases (3) and comprising a level (8) formed according to any of Claims 1 - 4 or 7 - 11 and which is held in a receiving recess (10) of the profile body (1), a reference axis (14) or plane, which is aligned totally parallel or at right angles to a measuring surface or measuring base of the water level gauge, passing symmetrically through a bore hole or some other cavity of the level body (7), **characterised in that** a composite comprising the level body (7) and the level carrier (6) or holder produced in one piece without a water level gauge and/or water level gauge profile body by means of plastic injection moulding is held resting in the receiving recess (10) by pre-tensioning against a profile body wall (2, 11).

13. The water level gauge according to Claim 12, **characterised in that** the inside of the receiving recess (10) which lies opposite a support line (5a) or plane of the composite comprising the level body (7) and the level carrier (6) or holder [Claim 14] is part of the profile body wall (2, 11) on the outside of which the measuring surface or base (3) is formed.

14. The water level gauge according to either of Claims 12 or 13, **characterised in that** the support line (5a) or plane runs through the receiving recess (10) in the region either of the recess opening or of the recess base.

15. The use of an injection moulding shaping tool for producing a one-piece level composite (8) comprising the combined components of the level body (7), the level carrier (6) or holder and the marking(s) (9a) and for generating the alignment position produced by the marked gas bubble or by the gas bubble (9) located between marking rings (9a).

16. The use according to Claim 15, **characterised in that** the shaping tool is used for casting a shape which contains at least one reference element reflecting or reproducing the marked gas bubble or alignment position, for example the reference axis (14) or plane.

## Revendications

1. Procédé de fabrication d'une fiole de niveau (8) pour niveau à bulle, dans lequel un corps de fiole (7) transparent et creux ou son alésage ou un autre espace creux est rempli d'un liquide contenant une bulle de gaz (9) et est pourvu d'un ou plusieurs marquages (9a) à contrastes de couleur qui sont associés à une position ajustée de la bulle de gaz (9) et/ou de l'espace creux de la fiole de niveau, et dans lequel l'espace creux de la fiole de niveau est traversé symétriquement par un axe de référence (14) ou un plan de référence, le procédé comprenant les étapes suivantes :
(a) pourvoir le corps de fiole (7), à l'extérieur du niveau à bulle et/ou du corps profilé du niveau à bulle, d'un support de fiole (6) en porte-à-faux ou en saillie, ou raccorder le corps de fiole (7) à celui-ci,
(b) former alors, par l'intermédiaire d'une ou de plusieurs arêtes/surfaces extérieures, saillies (5) ou autres limitations du support de fiole (6), un ou plusieurs moyens d'appui qui sont associés à une paroi d'appui (2, 11) ou arête d'appui, respectivement complémentaire, du niveau à bulle,
**caractérisé par** les étapes supplémentaires suivantes :
(c) configurer le corps de fiole (7), à l'extérieur du niveau à bulle et/ou d'un corps profilé du niveau à bulle, avec un tracé de l'axe de référence (14) ou du plan de référence qui, dans la position ajustée, s'étend de manière parfaitement parallèle ou perpendiculaire à une surface de mesure virtuelle du niveau à bulle ou forme un angle prédéterminé par exemple de 30 ou 45 degrés,
(d) fabriquer le support de fiole (6) d'une seule pièce avec le corps de fiole (7) par moulage par injection de matière plastique.

2. Procédé selon la revendication 1, **caractérisé en ce qu'**à l'extérieur du niveau à bulle et/ou du corps profilé du niveau à bulle, le ou les marquages (9a) sont agencés en présentant leurs plans de base sur l'espace creux et/ou le corps du niveau à bulle de façon telle que l'axe de référence (14) ou le plan de référence s'étend perpendiculairement à un plan de base respectif des marquages (9a).

3. Procédé selon l'une des revendications précédentes, **caractérisé en ce que** le corps de fiole (7) et/ou le support de fiole (6) sont pourvus d'un ou plusieurs éléments formant ressort (13).

4. Procédé selon l'une des revendications précédentes, **caractérisé en ce que** l'ensemble formé d'une seule pièce, dont les composants sont le corps de fiole, le support de fiole et le ou les marquages (9a), et éventuellement un ou plusieurs éléments ressort (13), est réalisé par moulage par injection de matière plastique en utilisant deux, trois composants de matière ou plus, chaque composant de l'ensemble étant réalisé avec l'un desdits plusieurs composants de matière de moulage par injection.

5. Procédé de fabrication d'un niveau à bulle comportant une fiole de niveau (8) fabriquée selon l'une des revendications précédentes, dans lequel un support de fiole (6) et une fiole de niveau (8) sont insérés dans un évidement de réception (10) du niveau à bulle, **caractérisé en ce que**, dans un premier temps, le support de fiole (6) et la fiole de niveau (8) sont fabriqués ensemble selon le procédé de moulage par injection de matière plastique en une seule pièce, laquelle est ensuite insérée dans l'évidement de réception (10), le support de fiole (6) étant amené en appui direct contre une paroi (2, 11) ou arête du niveau à bulle de façon telle qu'un axe de référence (14) ou plan de référence traversant symétriquement l'espace creux de la fiole de niveau s'étend de manière parfaitement parallèle ou perpendiculaire à la surface de mesure ou base de mesure (3) du niveau à bulle.

6. Procédé selon la revendication 5, **caractérisé en ce que** le support de fiole (6) est maintenu en appui contre la paroi (2, 11) ou l'arête du niveau à bulle par précontrainte.

7. Fiole de niveau (8) pour niveau à bulle fabriqué en particulier selon l'une des revendications précédentes, comprenant un corps de fiole (7) transparent et creux dont l'alésage ou autre espace creux est rempli d'un liquide contenant une bulle de gaz (9), et pourvu d'un ou plusieurs marquages (9a) qui sont associés à une position ajustée de la bulle de gaz (9) et/ou de l'espace creux du corps de fiole (7), lequel espace creux est traversé symétriquement par un axe de référence (14) ou un plan de référence, et le corps de fiole (7) est pourvu d'un support de fiole (6) en porte-à-faux ou en saillie, qui forme, avec une ou plusieurs arêtes/surfaces extérieures, saillies (5) ou autres limitations des moyens d'appui qui sont associés à une paroi (2, 11) ou une arête du niveau à bulle, **caractérisée en ce que** le support de fiole (6) est réalisé d'une seule pièce avec le corps de fiole (7) par moulage par injection de matière plastique sans le niveau à bulle ou à l'extérieur de celui-ci, le support de fiole (6) et le corps de fiole (7) étant disposés l'un par rapport à l'autre de telle façon qu'en cas d'appui virtuel sur la paroi (2, 11) ou l'arête du niveau à bulle, l'axe de référence (14) ou le plan de référence soit parfaitement parallèle ou perpendiculaire à une surface de mesure ou base de mesure du niveau à bulle ou bien forme un angle prédéterminé par exemple de 30 ou 45 degrés.

8. Fiole de niveau selon la revendication 7, **caractérisée en ce que** les moyens d'appui du support de fiole (6) sont réalisés sous forme de droite d'appui (5a) ou de plan d'appui s'étendant parallèlement ou perpendiculairement à l'axe de référence (14) ou au plan de référence.

9. Fiole de niveau selon la revendication 7 ou 8, **caractérisée en ce que** le support de fiole (6), le ou les marquages (9a) et le corps de fiole (7) et éventuellement des éléments formant ressort de pression (13) sont réalisés conjointement par moulage par injection de matière plastique.

10. Fiole de niveau selon l'une des revendications précédentes, **caractérisée en ce que** les moyens d'appui du support de fiole (6) comprennent, sur un côté associé à la paroi (2, 11) du niveau à bulle, au moins deux saillies d'appui (5) définissant une droite d'appui (5a).

11. Fiole de niveau selon l'une des revendications précédentes, **caractérisée par** un ou plusieurs éléments ressort (13) disposés sur le corps de fiole (7) ou sur le support de fiole (6) de façon telle que leurs forces résultantes ou composantes partielles de forces soient orientées en direction du support de fiole (6) et/ou de la droite d'appui (5a) et/ou des éventuelles saillies d'appui (5).

12. Niveau à bulle, comprenant un corps profilé (1) présentant une ou plusieurs surfaces ou bases de mesure (3) et une fiole de niveau (8), conçue selon l'une des revendications 1 à 4 ou 7 à 11, qui est sertie dans un évidement de réception (10) du corps profilé (1), un alésage ou autre espace creux du corps de fiole (7) étant traversé symétriquement par un axe de référence (14) ou un plan de référence, qui est orienté de manière parfaitement parallèle ou perpendiculaire à une surface de mesure ou base de mesure du niveau à bulle, **caractérisé en ce qu'**un ensemble réalisé d'une seule pièce, sans niveau à bulle et/ou corps profilé du niveau à bulle, par moulage par injection de matière plastique et constitué du corps de fiole (7) et du support de fiole (6) est maintenu en appui par précontrainte contre une paroi (2, 11) du corps profilé dans l'évidement de réception (10).

13. Niveau à bulle selon la revendication 12, **caractérisé en ce que** la face intérieure de l'évidement de réception (10), située à l'opposé d'une droite d'appui (5a) ou d'un plan d'appui de l'ensemble constitué du corps de fiole (7) et du support de fiole (6) *[Revendication 14]* fait partie de la paroi (2, 11) du corps profilé sur la face extérieure duquel est formée la surface ou base de mesure (3).

14. Niveau à bulle selon l'une des revendications 12 ou 13, **caractérisé en ce que** la droite d'appui (5a) ou le plan d'appui s'étend à travers l'évidement de réception (10) dans la région soit de l'ouverture de l'évidement, soit du fond de l'évidement.

15. Utilisation d'un moule pour moulage par injection pour fabriquer d'une seule pièce un ensemble à fiole (8) dont les composants sont le corps de fiole (7), le support de fiole (6) et le ou les marquages (9a) et pour créer la position ajustée résultant de la bulle de gaz marquée ou de la bulle de gaz (9) se trouvant entre des anneaux de marquage (9a).

16. Utilisation selon la revendication 15, **caractérisée en ce que** le moule est utilisé pour le moulage d'une forme qui contient au moins un élément de référence, par exemple un axe de référence (14) ou un plan de référence, reflétant ou reproduisant la bulle de gaz marquée ou la position ajustée.
